# EUROPEAN PATENT SPECIFICATION

(11) **EP 0 688 967 B1**
(45) Date of publication and mention of the grant of the patent: **22.12.1999**
(21) Application number: 95850110.8
(22) Date of filing: 15.06.1995
(51) Int. Cl.: F16C 35/063, F16C 35/078, F16D 1/09, F16C 25/06

(54) **Method of mounting bearings with a taper bore**
Verfahren zur Montage von Lagern mit konischer Bohrung
Méthode pour le montage de paliers à alésage conique

(30) Priority: 21.06.1994 SE 9402174
(43) Date of publication of application: 27.12.1995
(73) Proprietor: Aktiebolaget SKF, S-415 50 Göteborg (SE)
(72) Inventor: Bankeström, Jan Olof, S-421 39 Västra Frölunda (SE); Göthberg, Sven, S-421 59 Västra Frölunda (SE)
(74) Representative: Westman, P. Börje I.

(56) References cited:
- WO-A-92/19878
- FR-A- 2 619 428
- US-A- 4 411 549
- PATENT ABSTRACTS OF JAPAN vol. 16 no. 314 (M-1278) ,9 July 1992 & JP-A-04 088206 (KOYO MACH) 23 March 1992,

## Description

The present invention refers to a method according to the preamble of claim 1.

Bearings with taper bore are always mounted with an interference fit on shaft or adapter sleeve. The driving up of the inner race ring is preferably effected by means of a hydraulic nut. The reduction of the radial bearing clearance or the overall axial distance the inner ring shall be driven up on the taper seat, is used as a measure of the size of the fit.

The procedure at mounting, particularly of big bearings, is that the new bearings in a washing process first are relived from the anti-corrosive layer, they usually have been provided with prior to delivery from the bearing manufacturer.

Thereupon the bearing is usually placed on a base and the radial clearance in the bearing is measured with aid of thickness gauges. This measurement however is subjective and uncertain, which might lead to malfunction of the bearing.

Such a mounting is known from FR 2 619 428 A1.

When measuring the axial distance a bearing ring has been driven up, it is of course important for obtaining a satisfactory result, to know where the starting position for the driving up is, and this might be difficult as the bearing in practice is positioned loosely on the shaft journal and is pressed up thus that it has metallic contact around the entire bore of the bearing inner ring. This procedure is laborious as the bearings concerned are often heavy, and furthermore might have a certain out-of-roundness, which might also be valid for the shaft journal. The uncertainty, which therefore rules regarding the starting position for the driving up therefore can amount to several millimetres and this means certainly that a satisfactory and reliable result is not obtained even at accurate measuring of the length of the driving up with aid of a dial indicator.

Measuring of the clearance reduction is a method, which ought to be reliable, but which by experience has proven itself to give different results depending on which person who is performing the measurement, and thus different persons can obtain variations of 0.1 mm at measurement of the same clearance.

Therefore the purpose of the invention now is to provide a method for establishing at mounting of a bearing with taper bore, a correct amount a bearing ring shall be driven up on a shaft or the like, whereby correct mounting of the bearing is highly facilitated, at the same time as the above mentioned problems are eliminated, and this is obtained by the steps of the method defined in the second part of claim 1.

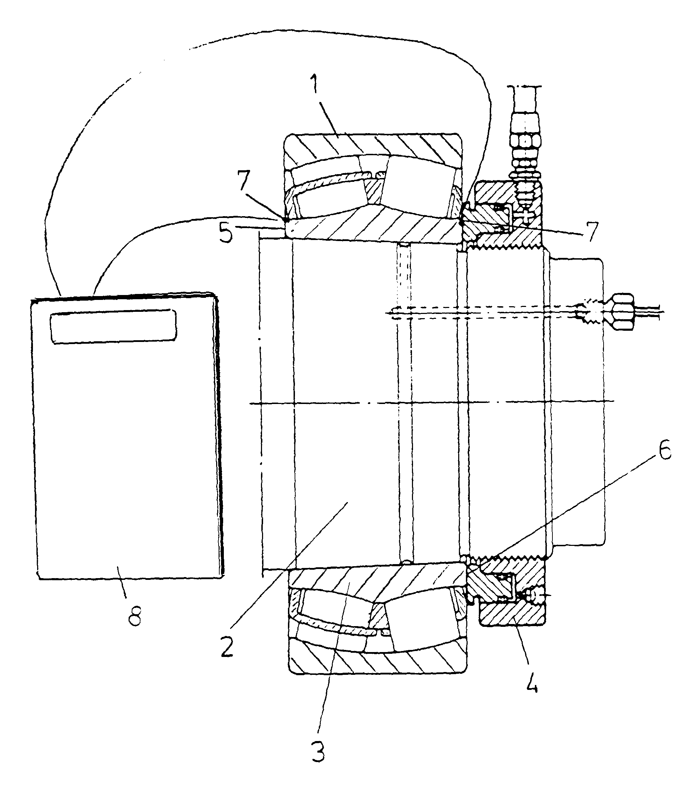

Hereinafter the invention will be further described with reference to an embodiment schematically shown in the accompanying drawing.

The drawing shows in cross section a spherical roller bearing 1 which is driven up a taper shaft journal 2. The bearing inner ring 3 has a taper bore and the driving up is effected in usual manner with aid of a hydraulic nut 4. At least at one side face 5, 6 of the inner ring 3 is arranged at least one sensor 7, by means of which the strain of the inner ring may be established. The sensors might be common strain gauges, but it is also possible to use other types of sensors, whereby it is essential that they in a simple and reliable manner can present the instantaneous strain of the inner ring.

The strain on one or both side faces then can be converted into a very accurate estimation of the current clearance reduction in the bearing by means of a simple calculation. This calculation of the clearance reduction can be estimated with good accuracy as the strain measured by the sensors in circumferential direction multiplied with twice the radial distance between the centre line of the supported shaft and the sensor. The accuracy in this calculation can be increased in that the radial distance between the centre line of the supported shaft and the sensor is substituted for an equivalent radial distance, which pays attention to the local deformation of the ring in dependency of the axial position within the studied section of the bearing ring.

By connecting the or those sensor(s) 7 arranged at the bearing to a simple instrument 8, which performs the above mentioned calculation, it is possible to obtain a numerical value for the instantaneous clearance in the bearing directly on the display of the instrument, whereby a continuous, safe indication is obtained over the actual amount the bearing ring is driven up and of the fit, no matter if the starting position for the driving up is known or not.

The method according to the invention thus incorporates continuous measuring of the strain in one or both side faces of the bearing inner ring and with a simple calculation continuously calculating a numerical value representing the instantaneous clearance reduction in the bearing.

In order to be able to establish the strain desired for a certain clearance reduction it is of course also necessary to know the original clearance of the bearing, but as this is known for each individual bearing, already at the manufacture, it is simple to provide the bearing with a relevant marking, e.g. in form of an engraved numerical value for the original clearance.

At measurement with the instrument during the time the ring is driven up, the current value for the bearing in question is fed into the instrument in every specific case.

By the steps referred to above a bearing equipped in accordance with the invention will be more easy to mount in a correct manner than a bearing without said device. Furthermore the requirement of washing away corrosion protection from the bearings prior to mounting, and finally the mounting can be accomplished without problems with a simple instruction and the instrument described also by personnel, that is not particularly trained.

The invention is not limited to the embodiment intimated in the drawing and described in connection thereto but modifications are possible within the scope of the accompanying claims.

## Claims

1. A method of mounting a bearing having a bearing ring (3) with tapered bore, on a shaft (2), whereby the ring (3) is positioned on the shaft (2) and the bearing is moved axially along the shaft by a correct amount
**characterized**
that strain is measured at at least one side face (5, 6) of the bearing ring (3), during the time the ring is driven up axially,
that the instantaneous clearance reduction in the bearing is calculated based upon the instantaneous measured strain and upon the initial bearing clearance, and
that the reduction of the internal bearing clearance is used for determining the amount the bearing should be driven along the shaft.

2. A method as claimed in claim 1,
**characterized in**
using sensors (7) arranged on said side face for measurement of the strain in at least one side face (5, 6) of the bearing ring (3).

3. A method as claimed in claim 2,
**characterized in**
using strain gauges as sensors (7).

4. A method as claimed in anyone of claims 2 or 3,
**characterized in**
that signals representative of changes in the strain in the side faces of said bearing ring (3) are supplied from said sensors (7) to a calculator (8), that the known value of the initial internal clearance of the bearing is fed into the calculator (8),
whereupon the calculator is caused to calculate the instantaneous nominal clearance reduction on basis of the the signals from the sensors (7) and the value of the said initial clearance.

## Patentansprüche

1. Verfahren zur Montage eines Lagers mit einem Lagerring (3) mit kegeliger Bohrung auf einer Welle (2), wobei der Ring (3) auf der Welle (2) positioniert wird und das Lager axial entlang der Welle um einen korrekten Betrag bewegt wird, **dadurch gekennzeichnet,** daß die Verformung an wenigstens einer Stirnseite (5, 6) des Lagerrings (3) während der Zeit gemessen wird, zu welcher der Ring axial aufgetrieben wird, daß die augenblickliche Verringerung des Spiels in dem Lager auf der Basis der augenblicklich gemessenen Verformung und des anfänglichen Lagerspiels berechnet wird und daß die Reduzierung des internen Lagerspiels zur Bestimmung des Betrages verwendet wird, um welchen das Lager entlang der Welle vorgetrieben wird.

2. Verfahren nach Anspruch 1, **dadurch gekennzeichnet,** daß Sensoren (7) verwendet werden, die an der Stirnseite zur Messung der Verformung an wenigstens einer Stirnseite (5, 6) des Lagerrings (3) angeordnet sind.

3. Verfahren nach Anspruch 2, **dadurch gekennzeichnet,** daß Dehnungsmeßstreifen als Sensoren (7) verwendet werden.

4. Verfahren nach Anspruch 2 oder 3, **dadurch gekennzeichnet,** daß für Änderungen in der Verformung an den Stirnseiten des Lagerrings (3) repräsentative Signale von den Sensoren (7) an einen Rechner (8) geleitet werden und der bekannte Wert des anfänglichen Lagerspiels in den Rechner (8) eingegeben wird, woraufhin der Rechner veranlaßt wird, die augenblickliche Reduzierung des Nominalspiels auf der Basis der Signale von den Sensoren (7) und dem Wert des anfänglichen Spiels zu berechnen.

## Revendications

1. Procédé pour monter sur un arbre (2) un roulement ayant une bague (3) de roulement à alésage conique, grâce auquel la bague (3) est mise en place sur l'arbre (2) et le roulement est déplacé axialement sur une distance correcte le long de l'arbre,
caractérisé en ce que
la déformation est mesurée sur au moins une face latérale (5, 6) de la bague (3) de roulement pendant l'enfilage axial de la bague,
la réduction instantanée du jeu dans le roulement est calculée sur la base de la déformation instantanée du jeu et sur la base du jeu initial du roulement, et
la réduction du jeu interne du roulement sert à déterminer la distance sur laquelle le roulement doit être enfilé sur l'arbre.

2. Procédé selon la revendicatior 1,
caractérisé en ce que
des capteurs (7) disposés sur ladite face latérale sont utilisés pour mesurer la déformation dans au moins une face latérale (5, 6) de la bague (3) de roulement.

3. Procédé selon la revendication 2,
caractérisé en ce que
des jauges de déformations sont utilisées comme capteurs (7).

4. Procédé selon l'une quelconque des revendications 2 et 3,
caractérisé en ce que
des signaux représentant des changements de la déformation dans les faces latérales de ladite bague (3) de roulement sont fournis par lesdits capteurs (7) à un dispositif de calcul (8), en ce que la valeur connue du jeu interne initial est fournie au dispositif de calcul (8),
à la suite de quoi le dispositif de calcul est amené à calculer la diminution instantanée du jeu nominal sur la base des signaux fournis par les capteurs (7) et de la valeur dudit jeu initial.
